# EUROPEAN PATENT APPLICATION

(11) **EP 1 217 774 A2**
(43) Date of publication of application: **26.06.2002**
(21) Application number: 01128951.9
(22) Date of filing: 06.12.2001
(51) Int. Cl.: H04J 3/16

(54) **Method of transparently transporting sonet STS-3C frame information across a network**

(30) Priority: 19.12.2000 US 741632
(71) Applicant: Alcatel USA Sourcing, L.P., Plano, Texas 75075-5813 (US)
(72) Inventor: Cook, Brian Scott, Plano, Texas 75075 (US); Akin, John D., Plano, Texas 75023 (US)
(74) Representative: Dreiss, Fuhlendorf, Steimle & Becker

(57) **Abstract**

A telecommunications environment (10) includes a first network (12) that uses a first protocol to transport a first frame structure (14). The telecommunications environment (10) includes a second network (16) that uses a second protocol to transport a second frame structure (18). The first frame structure (14) includes a header portion (22) and a payload portion (24) that is transported across the first network (12). For transport through the second network (16), the header portion (22) and the payload portion (24) are placed in a payload portion (26) of the second frame structure (18). The first frame structure (14) is reconstituted with the overhead portion (22) and the payload portion (24) extracted from second frame structure (18) at a destination node (17) of the second network (16) for transfer to a third network (20) having the first protocol.

## Description

### TECHNICAL FIELD OF THE INVENTION

The present invention is related in general to telecommunications signal processing and transport and more particularly to a method of transparently transporting frame information across a network.

### BACKGROUND OF THE INVENTION

Transparent transport is a technique of architecting networks so that network elements in different networks appear to be connected by a dedicated link operating under a same network protocol. The action of sending network traffic from one network element to a second network element at a geographically remote site through at least one other network which may be operating under a different protocol is known as tunneling. Tunneling enables transparent transport. Tunneling has been conventionally accomplished by encapsulating all frame elements of the first sending network's protocol (such as framing, header, redundancy check, and payload) into the payload area of the second transport network. When going from the second transport network to a third destination network, which has the same network protocol as the first sending network or which can be a return to anywhere in the first sending network, the un-encapsulated protocol reaching the third destination network appears to be transported transparently through the second transport network.

One problem with transparent transport is that tunneling often results in under utilization of the second transport network. This under-utilization occurs as a result of the protocol of the second transport network not having a large enough payload to hold an entire frame from the first sending network. Thus, a minimum of two frames in the second transport network is required to transport every frame of the first sending network.

A conventional approach to achieve a 1:1 mapping as opposed to the 1:2 mapping discussed above includes inserting the line and section overhead portions of the first sending network's frame into unused protected areas of the line and section overhead portions of the second transport network's frame. The path overhead portion of the first sending network's frame is inserted for the path overhead portion of the second transport network's frame.

Several problems arise with this approach. Bit errors that affect the line and section overhead portions for the second transport network will not be transparent to the nodes of the first sending network and the third destination network. Attempts to address this problem include keeping track of bit errors in the second transport network by carrying forward a bit interleaved parity. This parity calculation is performed at each node of the second transport network and the number of bit errors detected across the second transport network are introduced into the un-encapsulated frame. However, since the overhead from the first sending network and the second transport network occupy the same space such that the two networks are not disjoint, the bit interleaved parity calculation includes the protected areas and there is no way of determining if the bit errors occurred in the protected areas or the non-protected areas of the header portion of the second transport network's frame. Thus, there is the possibility that too many errors are attributed to the protected areas.

Other problems include the introduction of delay due to extraction and insertion of overhead into the frame structure of the second transport network. Further, current implementations are not effective for signal rates less than an STS-48 rate. This is because there are only 36 bytes of unused overhead space for these lower signal rates when a minimum of 39 bytes are needed for implementation. Therefore, it is desirable to implement a transparent transport technique that overcomes previous tunneling approaches.

### SUMMARY OF THE INVENTION

From the foregoing, it may be appreciated by those skilled in the art that a need has arisen for a technique to transparently transport frame information across an intermediate network. In accordance with the present invention, a method of transparently transporting frame information across a network is provided that substantially eliminates or greatly reduces disadvantages and problems associated with conventional frame transport techniques.

According to an embodiment of the present invention, there is provided a method of transparently transporting frame information across a network that includes placing payload information from a first frame into payload locations of a second frame. The first frame is. associated with a first network having a first protocol. The second frame is associated with a second network having a second protocol. Overhead information from the first frame is placed into payload locations of a payload for the second frame.

The present invention provides various technical advantages over conventional frame transport techniques. For example, one technical advantage is to place frame information of a first frame structure into a second frame structure. Another technical advantage is to recover the frame information in the first frame structure after being transported in the second frame structure. Yet another technical advantage is to map overhead information of the first frame structure into payload locations of the second frame structure. Other technical advantages may be readily ascertainable by those skilled in the art from the following figures, description, and claims.

### BRIEF DESCRIPTION OF THE DRAWINGS

For a more complete understanding of the present invention and the advantages thereof, reference is now made to the following description taken in conjunction with the accompanying drawings, wherein like reference numbers represent like parts, in which:
FIGURE 1 illustrates a simplified block diagram of a multi-network telecommunications environment;
FIGURE 2 illustrates a mapping of frame information from a first frame structure to a second frame structure.

### DETAILED DESCRIPTION OF THE INVENTION

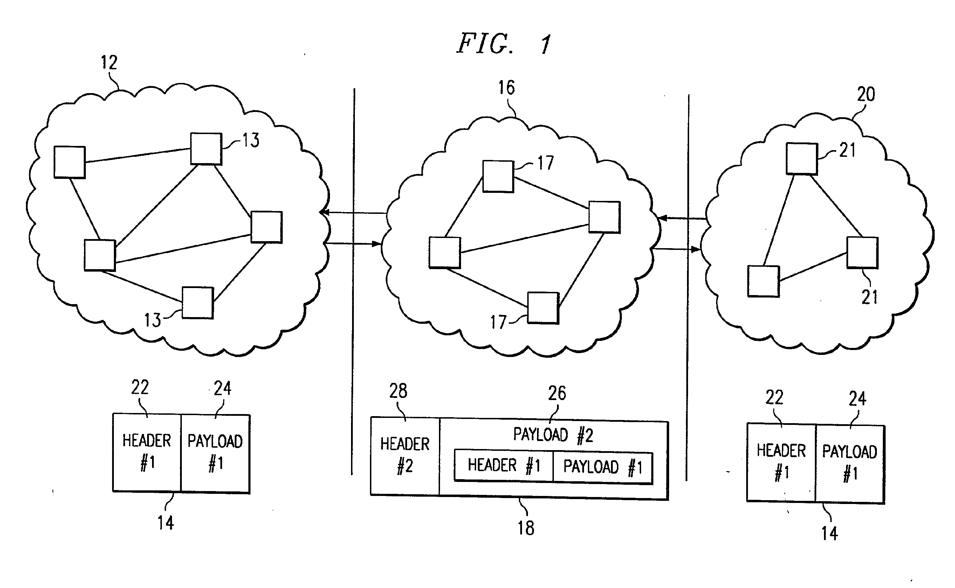

FIGURE 1 is a simplified block diagram of a multi-network telecommunications environment 10. Telecommunications environment 10 includes a first network 12 that uses a first protocol to transport a first frame structure 14. Telecommunications environment 10 includes a second network 16 that uses a second protocol to transport a second frame structure 18. Telecommunications environment 10 includes a third network 20 that uses the first protocol to transport the first frame structure 14. Third network 20 may be a separate network with the same characteristics as first network 12 or may be a remote site within first network 12.

First frame structure 14 includes a header portion 22 and a payload portion 24 that is transported across first network 12. For transport through second network 16, header portion 22 and payload portion 24 are placed in a payload portion 26 of second frame structure 18. Second frame structure 18 includes its own header portion 28. For transfer to third network 20, first frame structure 14 is reconstituted by second network 16 with overhead portion 22 and payload portion 24 extracted from second frame structure 18. Thus, third network 20 can transport first frame structure 14 as though the information had not been transferred through second network 16.

First network 12 provides first frame structure 14 from one of a plurality of nodes 13 to one of a plurality of nodes 17 within second network 16. Node 17 extracts payload 24 from first frame structure 14 and places payload 24 into payload 26 of second frame structure 18. Node 17 extracts overhead 22 from first frame structure 14 and places overhead 22 into payload 26 of second frame structure 18. Node 17 extracts overhead 22 on a pointer follower side of a pointer processor and passes overhead 22 to a pointer generator side of the pointer processor where it is inserted into available columns of payload 26. Second frame structure 18 is transported through second network 16 and is received at one of a plurality of nodes 21 in third network 20. Another node 17 reconstitutes first frame structure 14 from payload 26 of second frame structure 18 prior to transfer to third network 20.

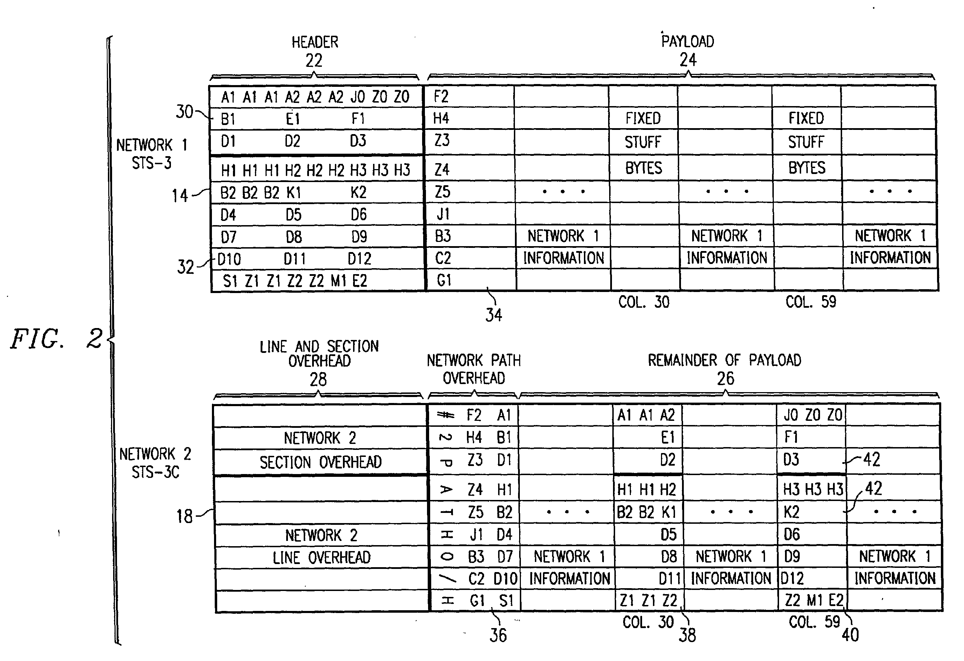

FIGURE 2 shows an example of encapsulating information in first frame structure 14 from first network 12 into second frame structure 18 of second network 16. First frame structure 14 is shown as a STS-3 telecommunications signal that carries three STS-1 telecommunications signals. The three STS-1 telecommunications signals are byte interleaved to form. the STS-3 telecommunications signal. Payload information for first frame structure 14 is mapped into payload locations of second frame structure 18.

First frame structure 14 includes line overhead 30, section overhead 32, and path overhead 34. Path overhead 34 of first frame structure 14, which may be concatenated or un-concatenated, is placed in concatenated form into path overhead locations 36 of second frame structure 18. Line overhead 30 and section overhead 32 are spread out within other payload locations of second frame structure 18. Specifically, line overhead 30 and section overhead 32 are placed into remaining space of path overhead 36 and into a first fixed stuff byte column 38 and a second fixed stuff byte column 40 of second frame structure 18. These fixed stuff byte columns are typically located at columns 30 and 59 of each STS-1 telecommunications signal.

Not all overhead bytes within header 22 of first frame structure 14 need to mapped into second frame structure 18. Overhead bytes within line overhead 30 and section overhead 32 that are redundant or unused between each of the STS-1 telecommunications signals may be discarded. Examples of redundant and unused bytes include the B1, E1, and F1 bytes. Also, overhead bytes may be the same between first network 12 and second network 16. Identical overhead bytes between networks need not be mapped as they can be readily recovered without any loss of data. Examples of identical bytes include the A2 and H2 bytes. By not having to map redundant or identical overhead bytes, a different mapping may be performed than that shown in FIGURE 2. The mapping of FIGURE 2 maintains location integrity for header 22 of first frame structure 14 within second frame structure 18. A more compact mapping may be achieved by using adjacent unused byte locations 42. More processing is required with this more compact mapping as compared to less processing for the header location integrity mapping shown. Alternatively, additional payload locations may be used for header mapping, reducing the capacity for information transport. Such an alternative may be possible if a full capacity of payload 24 is not needed to carry the information for first network 12.

By placing overhead bytes of first frame structure 14 into payload 26 of second frame structure 18, first network 12 and second network 16 are disjoint and thus there is no need to perform bit interleaved parity calculations. The mapping implementation becomes more simplified compared to the conventional mapping technique utilizing unused overhead space. By taking advantage of the larger unused payload area as opposed to the smaller unused overhead area, the mapping can be scaleable to the lower rate STS-3 telecommunication signal level compared to the STS-48 level of conventional techniques. Information transport may now be achieved across differing types of networks through network unique line and section terminating network elements. Moreover, a conventional approach for transparent transport using a slip buffer is avoided. A slip buffer resulted in disassociation between transport overhead and its payload data, causing a loss of this relationship during slip buffering.

Thus, it is apparent that there has been provided, in accordance with the present invention, a method of transparently transporting information across a network. that satisfies the advantages set forth above. Although the present invention has been described in detail, it should be understood that various changes, substitutions, and alterations may be readily ascertainable by those skilled in the art and may be made without departing from the spirit and scope of the present invention as defined by the following claims.

## Claims

1. A method of transparently transporting frame information across a network, comprising:
placing payload information from a first frame into payload locations of a second frame, the first frame associated with a first network having a first protocol, the second frame associated with a second network having a second protocol;
placing overhead information from the first frame into payload locations of a payload for the second frame.

2. The method of Claim 1, wherein the payload information of the first frame is mapped exactly into corresponding payload locations of the second frame.

3. The method of Claim 1, wherein the overhead information of the first frame is placed into fixed stuff locations of the payload of the second frame.

4. The method of Claim 1, wherein overhead bytes that are identical between the first network and the second network are not placed into the second frame.

5. The method of Claim 1, wherein redundant overhead bytes are discarded.

6. The method of Claim 1, wherein path overhead locations of the second frame include overhead information of the first frame.

7. The method of Claim 1, further comprising:
sending the second frame across the second network.

8. The method of Claim 7, further comprising:
receiving the second frame at a departure node of the second network;
extracting payload information for the second frame from the second frame;
extracting overhead information for the first frame;
reconstructing the first frame in the departure node from the extracted payload and overhead information.

9. The method of Claim 8, further comprising:
transferring the first frame to a third network, the third network having the first protocol

10. The method of Claim 9, wherein the third network is a remote location of the first network.

11. A network for transparently transporting frame information, comprising:
a node operable to receive frame information in a first frame structure, the first frame structure including a header portion and a payload portion, the node operable to place the payload portion of the first frame structure into a payload portion of a second frame structure, the node operable to place the header portion of the first frame structure into the payload portion of the second frame structure.

12. The network of Claim 11, wherein the node is operable to place the header portion of the first frame structure in fixed stuff bit locations of the payload of the second frame structure.

13. The network of Claim 11, wherein the node is operable to concatenate path overhead bytes of the payload portion of the first frame structure for placement into path overhead locations of the payload of the second frame structure.

14. The network of Claim 11, wherein the node is operable to discard redundant overhead bytes of the header portion of the first frame structure..

15. The network of Claim 11, wherein the node is operable to place an entire header and payload portions of the first frame structure into the payload portion of the second frame structure.

16. A method of transparently transporting frame information across a network, comprising:
receiving a first STS-3 telecommunications signal carrying three STS-1 telecommunications signals, the three STS-1 telecommunications signals each including header and payload information byte interleaved into a first frame structure for the first STS-3 telecommunications signal, the first frame structure having a header portion with byte interleaved header information of the three STS-1 telecommunications signals, the first frame structure having a payload portion with byte interleaved header information of the three STS-1 telecommunications signals, the payload portion of the first frame structure including fixed stuff byte locations, the payload portion of the first frame structure including path overhead locations;
placing the payload portion of the first frame structure into payload locations of a second frame structure for a second STS-3 telecommunications signal, . the path overhead locations of the payload portion of the first frame structure being placed into path overhead locations of the second frame structure;
placing the header portion of the first frame structure into payload locations of the second frame structure, the header portion of the first frame structure being placed into fixed stuff bytes of the second frame structure.

17. The method of Claim 16, wherein path overhead locations of the second frame structure includes path overhead for the second STS-3 telecommunications signal, path overhead for the first STS-3 telecommunications signal, and overhead bytes from the header portion of the first frame structure.

18. The method of Claim 16, further comprising:
discarding overhead bytes of the header portion of the first frame structure that are redundant between the three STS-1 telecommunications signals and that are identical with overhead bytes for the second STS-3 telecommunications signal.

19. The method of Claim 16, wherein the fixed stuff byte locations are in columns 30 and 59 of the second frame structure.

20. The method of Claim 16, further comprising:
concatenating path overhead for the three STS-1 telecommunications signals into a single path overhead representing all three STS-1 telecommunications signals.
